# FASCICULE DE BREVET EUROPEEN

(11) **EP 2 836 400 B1**
(45) Date de publication et mention de la délivrance du brevet: **03.06.2020**
(21) Numéro de dépôt: 13720476.4
(22) Date de dépôt: 11.04.2013
(51) Int. Cl.: B60R 21/34, B62D 25/10

(54) **VÉHICULE AUTOMOBILE COMPRENANT UN MOYEN DE RENFORT D'UN CAPOT AVANT**
KRAFTFAHRZEUG MIT EINER VORRICHTUNG ZUR VERSTÄRKUNG EINER FRONTKLAPPE
MOTOR VEHICLE COMPRISING A MEANS FOR REINFORCING A FRONT BONNET

(30) Priorité: 12.04.2012 FR 1253353
(43) Date de publication de la demande: 18.02.2015
(73) Titulaire: Renault S.A.S., 92100 Boulogne-Billancourt (FR)
(72) Inventeur: BILLON, Florent, 78000 Versailles (FR); JOLLIET, Karen, 78180 Montigny Le Bretonneux (FR); PATRELLE, Olivier, 78280 Guyancourt (FR); ZANOLIN, Dominique, 78150 Le Chesnay (FR)
(86) Numéro de dépôt international: PCT/FR2013/050787
(87) Numéro de publication internationale: WO 2013/153335

(56) Documents cités:
- EP-A2- 2 248 704
- WO-A1-03/011658
- DE-A1-102006 000 502
- JP-A- 2009 040 168

## Description

### Domaine technique de l'invention

L'invention concerne les véhicules automobiles, et notamment les structures de capot avant de véhicule automobile.

L'invention concerne un véhicule automobile comprenant un capot avant comportant une paroi intérieure et une paroi extérieure reliées entre elles, des moyens de liaison à la carrosserie du véhicule et un moyen de renfort disposé entre les parois intérieure et extérieure, apte à se déformer et encaisser les efforts en cas de choc avec un élément extérieur au véhicule, ledit moyen de renfort étant agencé au niveau d'une zone de point dur du capot avant, correspondant à une distance maximale spécifique entre la paroi intérieure et la paroi extérieure du capot avant, au regards de la longueur générale du capot avant, ledit moyen de renfort comprenant une pluralité de portions de fixation, destinées à être fixées à la paroi extérieure du capot, et une portion de liaison, reliant les différentes portions de fixation et destinée à être fixée à la paroi intérieure du capot.

### Etat de la technique

Un capot avant de véhicule automobile est un élément mobile de carrosserie qui, fermé, protège un compartiment moteur et, ouvert, permet l'accès aux organes mécaniques pour l'entretien et la réparation notamment. Généralement, un capot avant comprend une paroi intérieure, appelée aussi doublure de capot, et une paroi extérieure, appelée aussi peau du capot, les deux parois intérieure et extérieure étant reliées entre elles.

Au fil des années, les normes de sécurité pour les véhicules automobiles sont devenues de plus en plus sévères, de sorte qu'il est nécessaire de prévoir un amortissement de l'énergie d'un choc, notamment de la tête d'un piéton, sur le capot avant, afin de minimiser les blessures engendrées par un tel choc. Afin de répondre à de telles normes de sécurité, des systèmes d'amortissement du capot ont déjà été proposés pour répondre aux différents critères de caractérisation de la sécurité d'un véhicule.

Notamment, les documents EP 1 510 421 et JP 2009/040168 décrivent des agencements de capot avant comportant un moyen de renfort sous forme d'une boîte rapportée entre les deux parois intérieure et extérieure du capot avant. Une telle boîte constituée de plusieurs pièces ne permet pas de répondre à toutes les problématiques notamment en termes de critères de choc et ne peut pas s'implanter dans des environnements de capot où la distance entre les parois intérieure et extérieure est importante (notamment due à des contraintes de design fortes).

De même, le document EP 2 163 460 décrit un moyen de renfort agencé sensiblement au niveau d'une zone de serrure du capot avant, mais qui ne permet pas de répondre complètement aux critères de chocs, notamment de part sa forme et son implantation.

Ainsi, il n'existe actuellement aucune solution spécifique au niveau du capot avant qui permette de répondre à des problématiques spécifiques liées à des zones spécifiques du capot et à des contraintes dimensionnelles importantes du capot, notamment dues à des contraintes design fortes.

### Objet de l'invention

L'invention a pour but de remédier à l'ensemble des inconvénients précités et a pour objet la réalisation d'un véhicule automobile dont le capot avant respecte les différentes normes de sécurité en cas de choc avec un élément extérieur, notamment la tête d'un piéton, et ce même pour un cas spécifique de choc piéton médiatique, plus contraignant que les autres types de chocs.

Cet objet de l'invention est caractérisé par le fait que ledit moyen de renfort comprend une première portion de fixation, formant une paroi pleine, et des deuxième et troisième portions de fixation formant deux branches sensiblement parallèles, séparées par un espace vide et reliées à leur base par une branche transversale, agencée dans le prolongement de ladite portion de liaison du moyen de renfort.

Un tel agencement du moyen de renfort, conformé de sorte à s'adapter à ladite distance spécifique au niveau de ladite zone de point dur du capot avant, entre les parois intérieure et extérieure du capot, permet ainsi d'autoriser un enfoncement nécessaire pour amortir la tête d'un piéton lors d'un choc.

D'autres avantages et caractéristiques de l'invention peuvent être considérés isolément ou en combinaison :
- Chaque portion de fixation peut comporter une extrémité recourbée, non reliée à la paroi extérieure du capot.
- Ledit moyen de renfort peut comporter des nervures de renforcement, orientées longitudinalement et/ou transversalement.
- La longueur générale dudit moyen de renfort peut être comprise entre 100mm et 300mm, de préférence de l'ordre de 235mm.
- La hauteur au niveau de ladite zone de point dur peut être de l'ordre de 110mm, pour une longueur générale du capot avant de l'ordre de 780mm.
- Ledit moyen de renfort peut être une unique pièce réalisée par emboutissage d'une tôle en matériau métallique.

### Description sommaire des dessins

D'autres avantages et caractéristiques ressortiront plus clairement de la description qui va suivre de modes particuliers de réalisation de l'invention donnés à titre d'exemples non limitatifs et représentés aux dessins annexés, dans lesquels :
La figure 1 représente une vue partielle en perspective d'un mode particulier de réalisation d'un véhicule automobile selon l'invention.
La figure 2 représente une vue en coupe du véhicule automobile selon la figure 1, selon un axe longitudinal du véhicule.
La figure 3 est une vue de détail en perspective du moyen de renfort agencé entre les parois intérieure et extérieure du capot avant du véhicule automobile selon les figures 1 et 2.
La figure 4 est une vue de détail en perspective du moyen de renfort selon la figure 3, où uniquement la paroi intérieure est représentée.
La figure 5 est une vue partielle de côté de la figure 4.

### Description de modes particuliers de réalisation

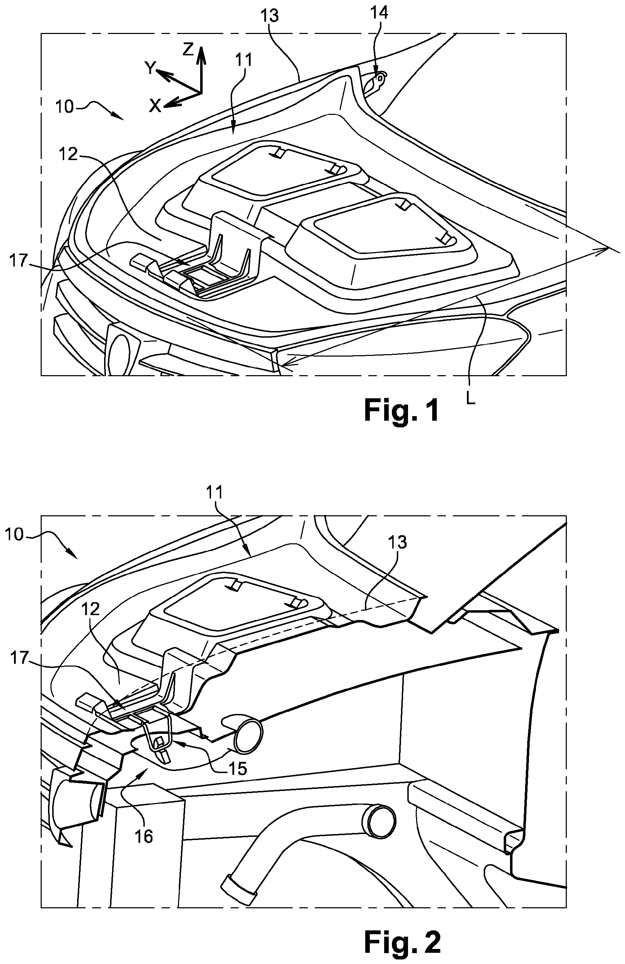

Dans la description qui va suivre, des éléments identiques ou analogues porteront les mêmes chiffres et nombres de référence. Les expressions telles que « arrière » et « avant », « gauche » et « droite », « supérieur » et « inférieur » et les orientations « longitudinale », « transversale » et « verticale » seront définies en référence au trièdre X, Y, Z représenté sur la figure 1 et aux définitions données dans la description. Notamment, la direction longitudinale X correspond au sens de déplacement en marche avant d'un véhicule automobile.

Sur la figure 1, un véhicule automobile 10 selon l'invention est représenté partiellement en perspective, notamment au niveau d'un capot avant 11 du véhicule. Le capot avant 11 comprend une paroi intérieure 12 et une paroi extérieure 13, reliées entre elles pour former un capot avant sensiblement creux (figure 2). Sur les figures 1 et 2, la paroi extérieure 13 est illustrée par transparence, notamment afin de visualiser les éléments présents entre les deux parois intérieure 12 et extérieure 13 du capot avant 11. Par ailleurs, sur l'ensemble des figures 1 à 5, le capot avant 11 est représenté en position normale d'utilisation, sans aucune déformation due à un choc, notamment un choc piéton.

Sur les figures 1 et 2, le capot avant 11 comprend notamment des premiers moyens de liaison 14 à la carrosserie du véhicule 10, plus particulièrement destinés à l'articulation du capot avant 11 par rapport à la carrosserie, et des seconds moyens de liaison 15, plus particulièrement destinés au verrouillage du capot par rapport à la carrosserie, par exemple du type verrou et serrure.

Plus particulièrement, dans le mode particulier de réalisation représenté sur les figures 1 et 2, les seconds moyens de liaison 15 sont agencés au niveau d'une zone critique du capot avant 11, appelée aussi « zone de point dur », au niveau de laquelle les risques sont les plus importants en cas de choc avec un élément extérieur, notamment la tête d'un piéton. En effet, la zone de point dur 16 correspond à une zone où la distance, ou hauteur H, entre les parois intérieure 12 et extérieure 13 du capot avant 11 est maximale, au regard de la longueur L générale du capot avant 11.

Dans le mode particulier représenté sur les figures 1 et 2, cette zone du point dur 16 est notamment dictée par des contraintes en termes de design et de structure de face avant du véhicule automobile 10. A titre d'exemple, la hauteur H entre les parois intérieure 12 et extérieure 13, au niveau de la zone de point dur 16, est de l'ordre de 110mm, pour une longueur L générale du capot avant 11 sensiblement de l'ordre de 780mm.

Pour empêcher notamment tout risque d'accident, en cas de choc extérieur et déformation du capot avant 11 au niveau de cette zone de point dur 16, le véhicule automobile 10 selon l'invention comporte ainsi un pontet de matière 17, faisant office de moyen de renfort du capot avant 11 au niveau de cette zone de point dur 16. Le pontet de matière 17, agencé entre les parois intérieure 12 et extérieur 13, est destiné à se déformer en cas de choc avec un élément extérieur (non représenté sur les figures) au véhicule 10.

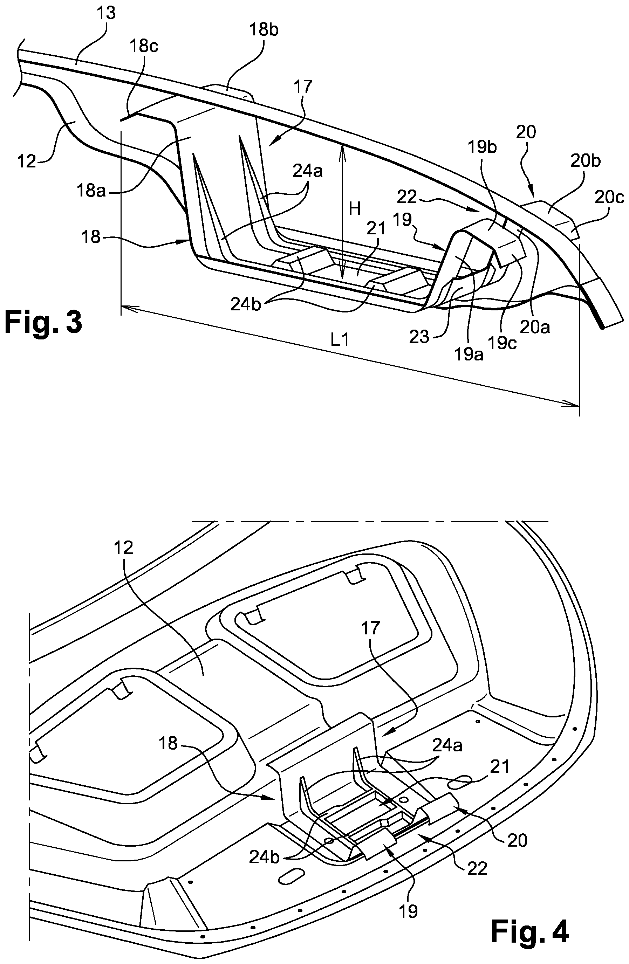

Comme représenté plus en détails sur les figures 3 à 5, le pontet de matière 17 comprend une première portion de fixation 18 et des deuxième 19 et troisième 20 portions de fixation, reliées par une portion de liaison 21. Plus particulièrement, la portion de liaison 21 est la partie du pontet de matière 17 destinée à être fixée à la paroi intérieure 12 du capot avant 11, tandis que les portions de fixation 18, 19 et 20 sont les parties du pontet de matière 17 destinées à être fixées à la paroi extérieure 13 du capot avant 11.

Sur les figures 3 et 4, la première portion de fixation 18 comprend une première paroi pleine 18a, sensiblement plane, s'étendant sensiblement à la verticale entre les parois intérieure 12 et extérieure 13 du capot avant 11, dans le prolongement de la portion de liaison 21. La première portion de fixation 18 comprend en outre une seconde paroi 18b pleine et sensiblement plane, destinée à être agencée sensiblement parallèlement à la paroi extérieure 13 du capot. C'est au niveau de cette seconde paroi 18b pleine qu'est, de préférence, fixé le pontet de matière 17 à la paroi extérieure 13. La première portion de fixation 18 comporte aussi une troisième paroi 18c pleine, formant une extrémité recourbée pour la portion de fixation 18 du pontet de matière 17, non liée à la paroi extérieure 13 du capot avant. Une telle extrémité recourbée permet notamment d'apporter une raideur supplémentaire au capot avant 11 pour une bonne gestion de l'enfoncement en cas d'un choc avec une tête et permet également de finir la forme du pontet de matière 17 de façon non agressive, notamment pour les manipulations lors du montage.

Par ailleurs, une telle première 18 portion de fixation forme une paroi pleine, de sorte à pouvoir répondre à toutes les sollicitations engendrées en cas de déformation du pontet de matière 17, qui sont généralement les plus fortes dans cette partie de la pièce, par exemple en cas de fermeture du capot avant 11 avec les mains.

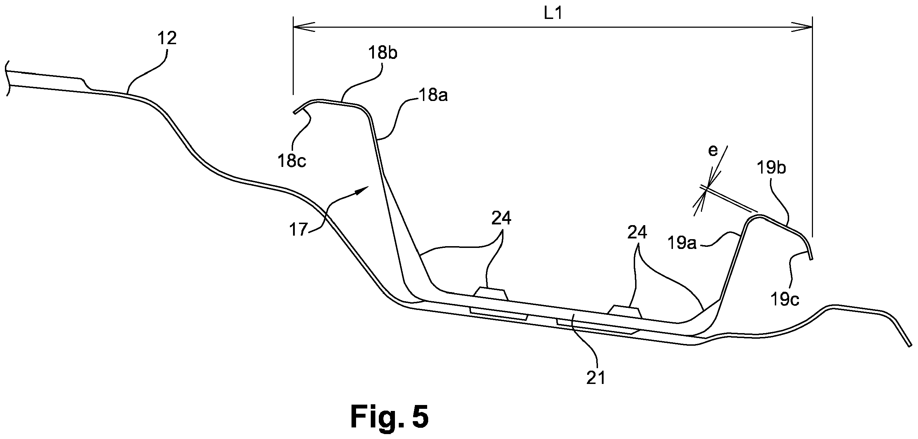

Sur les figures 3 et 4, les deuxième 19 et troisième 20 portions de fixation du pontet de matière 17 sont formées par deux branches parallèles entre elles, séparées par un espace vide 22 et reliées à leur base par une branche transversale 23, agencée dans le prolongement de la portion de liaison 21, de sorte à s'étendre à la verticale en direction de la paroi extérieure 13 du capot avant 11 (figures 3 et 5).

Chaque portion de fixation 19, 20 comporte ainsi une première paroi 19a, 20a s'étendant sensiblement à la verticale en direction de la paroi extérieure 13 du capot avant 11, dans le prolongement de la branche transversale 23 les liant. Chaque portion de fixation 19, 20 comprend en outre une seconde paroi 19b, 20b pleine et sensiblement plane, agencée sensiblement parallèlement à la paroi extérieure 13 du capot avant 11. C'est au niveau de ces secondes parois 19b, 20b pleines qu'est, de préférence, fixé le pontet de matière 17 à la paroi extérieure 13. Chaque portion de fixation 19, 20 comporte aussi une troisième paroi 19c, 20c pleine, formant une extrémité recourbée pour chaque portion de fixation 19, 20 du pontet de matière 17, non liée à la paroi extérieure 13 du capot avant 11. De même, une telle extrémité recourbée permet notamment d'apporter une raideur supplémentaire au capot avant pour une bonne gestion de l'enfoncement en cas d'un choc avec une tête et permet également de finir la forme du pontet de matière 17 de façon non agressive, notamment pour les manipulations lors du montage.

Les deux portions de fixation 19, 20 ne forment pas avantageusement de paroi pleine, comme la première portion de fixation 18, notamment car les contraintes en cas de déformation sont moins fortes sur cette partie du pontet de matière 17. D'une façon générale, il est possible d'avoir un espace vide 22 entre les parois 19 et 20 plus ou moins important en fonction de l'effort à atteindre pour réaliser la compensation du choc subi.

Comme représenté plus particulièrement sur les figures 4 et 5, où la paroi extérieure 13 du capot avant 11 n'est pas représentée pour des raisons de clarté, le pontet de matière 17 forme ainsi une pièce de renfort dont la section générale est en forme de U. La base du U est alors formée par la portion de liaison 21, fixée sur la paroi intérieure 12 du capot avant 11, et les deux branches relevées du U sont formées par les portions de fixation 18, 19 et 20, fixées sur la paroi extérieure 13 du capot avant 11.

Par ailleurs, comme représenté plus particulièrement sur les figures 3 à 5, le pontet de matière 17 comporte des nervures de renforcement 24, aptes à optimiser la résistance du pontet de matière 17 en cas de déformation. Plus particulièrement, le pontet de matière 17 comporte avantageusement deux nervures longitudinales 24a, c'est-à-dire orientées selon l'axe longitudinal X de la figure 1, et deux nervures transversales 24b, c'est-à-dire orientées selon l'axe transversal Y de la figure 1. Les deux nervures transversales 24b sont formées, de préférence, dans la portion de liaison 21 du pontet de matière 17 (figure 4) et s'étendent parallèlement entre elles et perpendiculairement aux deux nervures longitudinales 24a (figure 4). Les deux nervures longitudinales 24b sont formées, de préférence, dans la portion de liaison 21 et aussi dans les portions de fixation 18, 19 et 20, plus particulièrement au niveau des parois 18a, 19a et 20a des portions de fixation s'étendant sensiblement à la verticale, en direction de la paroi extérieure 13 du capot avant 11 (figure 5).

Par ailleurs, le pontet de matière 17 est, dans le mode particulier de réalisation du véhicule automobile selon les figures 1 à 5, une unique pièce réalisée par emboutissage d'une tôle en matériau métallique. A titre d'exemple non limitatif, le pontet de matière 17 a une épaisseur e uniforme, c'est-à-dire y compris au niveau des nervures de renforcement 24, comprise entre 0,5mm et 2mm, par exemple d'environ 0,65mm. De même, la longueur générale L1 du pontet de matière 17 est comprise entre 100mm et 300mm, de préférence de l'ordre de 235mm (figure 5).

Ainsi, le mode particulier de réalisation du véhicule automobile 10 selon l'invention, comme décrit ci-dessus, présente donc l'avantage principal d'avoir un pontet de matière 17 comme moyen de renfort qui permet de résister à tout type de choc et plus particulièrement à un choc spécifique dans une zone dite de point dur, sensiblement au regard de la serrure du capot, et dans un environnement spécifique avec une hauteur importante d'embouti entre la paroi intérieure 12 et la paroi extérieure 13 du capot avant 11. Grâce à l'invention, le capot avant 11 de véhicule automobile respecte ainsi les normes de sécurité en cas de choc avec un élément extérieur, notamment la tête d'un piéton.

Par ailleurs, malgré une zone très critique car très rigide, notamment dû à la présence de la serrure du capot avant, et malgré une distance importante entre les deux parois intérieure 12 et extérieure 13 du capot avant 11, le pontet de matière 17 est simple à implanter et permet de façon simple et peu couteuse de renforcer le capot avant 11.

De même, une telle pièce de renfort dans cette zone permet non seulement de respecter les critères de sécurité en cas de chocs, mais aussi permet d'éviter tout phénomène de cloquage qui pourrait apparaître dans cette zone, dans le cas où une personne s'appuierait sur le capot.

L'invention n'est pas limitée aux différents modes de réalisation décrits ci-dessus. Notamment, la forme et les dimensions du pontet de matière 17 peuvent être différentes, tant que le pontet de matière permet de répondre aux normes de sécurité, tout en renforçant le capot avant.

Par ailleurs, le pontet de matière 17 peut ne pas avoir de nervures ou peut avoir des nervures supplémentaires agencées différemment. De même, le pontet de matière 17 peut avoir plus ou moins de portions de fixation, tant que la liaison à la paroi extérieure 13 du capot avant 11 est suffisante pour résister aux chocs.

Par ailleurs, dans d'autres variantes de réalisation non représentées, l'inclinaison entre les portions de fixation 19, 20 et la portion de liaison 21 peut aussi être différente, de manière à jouer sur la résistance du pontet de matière 17 selon la résistance au choc recherchée.

L'invention s'applique à tout type de véhicule automobile. Plus particulièrement, l'invention s'applique à des véhicules automobiles, dont la zone face avant et l'environnement serrure est très contraint, notamment par une distance importante entre les parois du capot avant.

## Revendications

1. Véhicule automobile (10) comprenant un capot avant (11) comportant une paroi intérieure (12) et une paroi extérieure (13) reliées entre elles, des moyens de liaison (14, 15) à la carrosserie du véhicule (10) et un moyen de renfort (17) disposé entre les parois intérieure (12) et extérieure (13), apte à se déformer et encaisser les efforts en cas de choc avec un élément extérieur au véhicule (10), ledit moyen de renfort (17) étant agencé au niveau d'une zone de point dur (16) du capot avant (11), correspondant à une distance maximale (H) spécifique entre la paroi intérieure (12) et la paroi extérieure (13) du capot avant (11), au regard de la longueur (L) générale du capot avant (11), ledit moyen de renfort (17) comprenant une pluralité de portions de fixation (18, 19, 20), destinées à être fixées à la paroi extérieure (13) du capot (11), et une portion de liaison (21), reliant les différentes portions de fixation (18, 19, 20) et destinée à être fixée à la paroi intérieure (12) du capot (11), véhicule **caractérisé en ce que** ledit moyen de renfort (17) comprend une première (18) portion de fixation, formant une paroi pleine, et des deuxième (19) et troisième (20) portions de fixation formant deux branches sensiblement parallèles, séparées par un espace vide (22) et reliées à leur base par une branche transversale (23), agencée dans le prolongement de ladite portion de liaison (21) du moyen de renfort (17).

2. Véhicule (10) selon la revendication précédente, **caractérisé en ce que** chaque portion de fixation (18, 19, 20) comporte une extrémité recourbée (18c, 19c, 20c), non reliée à la paroi extérieure (13) du capot (11).

3. Véhicule (10) selon la revendication 1 ou 2, **caractérisé en ce que** ledit moyen de renfort (17) comporte des nervures (24) de renforcement, orientées longitudinalement (24a).

4. Véhicule (10) selon l'une quelconque des revendications précédentes, **caractérisé en ce que** ledit moyen de renfort comporte des nervures (24) de renforcement, orientées transversalement (24b).

5. Véhicule (10) selon l'une quelconque des revendications précédentes, **caractérisé en ce que** la longueur (L1) générale dudit moyen de renfort (17) est comprise entre 100mm et 300mm, de préférence de l'ordre de 235mm.

6. Véhicule (10) selon l'une quelconque des revendications précédentes, **caractérisé en ce que** la hauteur (H) au niveau de ladite zone (16) de point dur est de l'ordre de 110mm, pour une longueur (L) générale du capot avant (11) de l'ordre de 780mm.

7. Véhicule (10) selon l'une quelconque des revendications précédentes, **caractérisé en ce que** ledit moyen de renfort (17) est une unique pièce réalisée par emboutissage d'une tôle en matériau métallique.

## Patentansprüche

1. Kraftfahrzeug (10), welches eine Fronthaube (11) umfasst, die eine Innenwand (12) und eine Außenwand (13), die miteinander verbunden sind, Mittel zur Verbindung (14, 15) mit der Karosserie des Fahrzeugs (10) und ein zwischen der Innenwand (12) und der Außenwand (13) angeordnetes Verstärkungsmittel (17), das im Falle eines Zusammenstoßes mit einem außerhalb des Fahrzeugs (10) befindlichen Element in der Lage ist, sich zu verformen und die Kräfte aufzunehmen, aufweist, wobei das Verstärkungsmittel (17) an einem Bereich des Hardpoints (16) der Fronthaube (11) angeordnet ist, der einem spezifischen maximalen Abstand (H) zwischen der Innenwand (12) und der Außenwand (13) der Fronthaube (11) entspricht, im Hinblick auf die Gesamtlänge (L) der Fronthaube (11),
wobei das Verstärkungsmittel (17) mehrere Befestigungsabschnitte (18, 19, 20), die dazu bestimmt sind, an der Außenwand (13) der Haube (11) befestigt zu werden, und einen Verbindungsabschnitt (21), der die verschiedenen Befestigungsabschnitte (18, 19, 20) verbindet und dazu bestimmt ist, an der Innenwand (12) der Haube (11) befestigt zu werden, umfasst,
wobei das Fahrzeug **dadurch gekennzeichnet ist, dass** das Verstärkungsmittel (17) einen ersten (18) Befestigungsabschnitt umfasst, der eine durchgehende Wand bildet, und einen zweiten (19) und einen dritten (20) Befestigungsabschnitt, die zwei im Wesentlichen parallele Schenkel bilden, die durch einen freien Raum (22) getrennt sind und an ihrem Fuß durch einen Quersteg (23) verbunden sind, der in der Verlängerung des Verbindungsabschnitts (21) des Verstärkungsmittels (17) angeordnet ist.

2. Fahrzeug (10) nach dem vorhergehenden Anspruch, **dadurch gekennzeichnet, dass** jeder Befestigungsabschnitt (18, 19, 20) ein gekrümmtes Ende (18c, 19c, 20c) aufweist, das nicht mit der Außenwand (13) der Haube (11) verbunden ist.

3. Fahrzeug (10) nach Anspruch 1 oder 2, **dadurch gekennzeichnet, dass** das Verstärkungsmittel (17) Verstärkungsrippen (24) aufweist, die in Längsrichtung ausgerichtet sind (24a).

4. Fahrzeug (10) nach einem der vorhergehenden Ansprüche, **dadurch gekennzeichnet, dass** das Verstärkungsmittel Verstärkungsrippen (24) aufweist, die in Querrichtung ausgerichtet sind (24b) .

5. Fahrzeug (10) nach einem der vorhergehenden Ansprüche, **dadurch gekennzeichnet, dass** die Gesamtlänge (L1) des Verstärkungsmittels (17) zwischen 100 mm und 300 mm, vorzugsweise in der Größenordnung von 235 mm liegt.

6. Fahrzeug (10) nach einem der vorhergehenden Ansprüche, **dadurch gekennzeichnet, dass** die Höhe (H) am Bereich (16) des Hardpoints in der Größenordnung von 110 mm liegt, für eine Gesamtlänge (L) der Fronthaube (11) in der Größenordnung von 780 mm.

7. Fahrzeug (10) nach einem der vorhergehenden Ansprüche, **dadurch gekennzeichnet, dass** das Verstärkungsmittel (17) ein einziges Teil ist, das durch Tiefziehen eines Bleches aus metallischem Material hergestellt ist.

## Claims

1. Motor vehicle (10) comprising a front bonnet (11) having an inner wall (12) and an outer wall (13) which are connected to one another, connection means (14, 15) for connection to the body of the vehicle (10), and a reinforcing means (17) arranged between the inner (12) and outer (13) walls and able to deform and absorb the forces in the event of impact with an element external to the vehicle (10), said reinforcing means (17) being arranged at a hard point zone (16) of the front bonnet (11), corresponding to a specific maximum distance (H) between the inner wall (12) and the outer wall (13) of the front bonnet (11), with regard to the general length (L) of the front bonnet (11), said reinforcement means (17) comprising a plurality of fastening portions (18, 19, 20) intended to be fastened to the outer wall (13) of the bonnet (11), and a connection portion (21) connecting the various fastening portions (18, 19, 20) and intended to be fastened to the inner wall (12) of the bonnet (11), which vehicle is **characterized in that** said reinforcing means (17) comprises a first (18) fastening portion, forming a solid wall, and second (19) and third (20) fastening portions forming two substantially parallel branches separated by an empty space (22) and connected at their base by a transverse branch (23) arranged as an extension of said connection portion (21) of the reinforcing means (17).

2. Vehicle (10) according to the preceding claim, **characterized in that** each fastening portion (18, 19, 20) has a curved end (18c, 19c, 20c) which is not connected to the outer wall (13) of the bonnet (11) .

3. Vehicle (10) according to Claim 1 or 2, **characterized in that** said reinforcing means (17) has reinforcing ribs (24) oriented longitudinally (24a) .

4. Vehicle (10) according to any one of the preceding claims, **characterized in that** said reinforcing means has reinforcing ribs (24) oriented transversely (24b) .

5. Vehicle (10) according to any one of the preceding claims, **characterized in that** the general length (L1) of said reinforcing means (17) is between 100 mm and 300 mm, preferably of the order of 235 mm.

6. Vehicle (10) according to any one of the preceding claims, **characterized in that** the height (H) at said hard point zone (16) is of the order of 110 mm, for a general length (L) of the front bonnet (11) of the order of 780 mm.

7. Vehicle (10) according to any one of the preceding claims, **characterized in that** said reinforcing means (17) is a single part produced by stamping a sheet of metal material.
